# EUROPÄISCHE PATENTSCHRIFT

(11) **EP 1 166 611 B1**
(45) Veröffentlichungstag und Bekanntmachung des Hinweises auf die Patenterteilung: **01.09.2004**
(21) Anmeldenummer: 01113412.9
(22) Anmeldetag: 01.06.2001
(51) Int. Cl.: A01B 71/06, A01D 69/06

(54) **Antriebsvorrichtung**
Driving device
Dispositif d'entrainement

(30) Priorität: 20.06.2000 DE 20010904 U
(43) Veröffentlichungstag der Anmeldung: 02.01.2002
(73) Patentinhaber: Fella-Werke GmbH & Co. KG, 90537 Feucht bei Nürnberg (DE)
(72) Erfinder: Pürrer, Josef, 90537 Feucht (DE); Kohl Bernhard, 90537 Feucht (DE)
(74) Vertreter: Grünecker, Kinkeldey, Stockmair & Schwanhäusser Anwaltssozietät

(56) Entgegenhaltungen:
- EP-A- 0 548 720
- EP-A- 0 678 237
- FR-A- 2 357 161
- US-A- 4 860 526
- US-A- 5 339 907

## Beschreibung

Die Erfindung betrifft eine Antriebsvorrichtung der im Oberbegriff des Anspruchs 1 angegebenen Art.

Bei einer aus DE-U-299 19 025 bekannten Antriebsvorrichtung ist an dem mit einem Anbaurahmen verschraubten Eingangs-Winkelgetriebe, an das die Zapfwelle des Schleppers anschließbar ist, ein einziges Ausgangs-Winkelgetriebe um die Getriebewelle drehbar angebracht. An die Ausgangswelle des Ausgangs-Winkelgetriebes ist eine in die Maschineneinheit führende Gelenkwelle angeschlossen. An einer Seite des Gehäuses des Ausgangs-Winkelgetriebes ist eine Drehmomentstütze schwenkbar angelenkt, die sich in etwa parallel zur Gelenkwelle in die Maschineneinheit erstreckt. Das Ausgangs-Winkelgetriebe nimmt die jeweils durch die Schwenklage der Maschineneinheit relativ zum Anbaurahmen vorgegebene Schwenklage ein. Durch diese Anordnung wird bei Kurvenfahrt die Zapfwelle vom Schlepper zum Eingangs-Winkelgetriebe nicht abgewinkelt, so dass für alle Winkellagen zwischen dem Schlepper und der Maschineneinheit ein ungestörter, drehschwingungsfreier Antrieb möglich ist.

In der Praxis sind für zum Erzielen größerer Arbeitsbreiten landwirtschaftliche Maschinen bekannt, die mindestens zwei nach links bzw. rechts ausladende Maschineneinheiten in Kombination umfassen. In der Antriebsvorrichtung einer solchen Maschine mit mehr als einer Maschineneinheit ist für jede Maschineneinheit ein Schwenkgetriebe der oben erwähnten Art vorgesehen. Zusätzlich wird den Eingangs-Winkelgetrieben dieser Schwenkgetriebe ein gemeinsames Verteilergetriebe zugeordnet, an das die Zapfwelle des Schleppers angeschlossen wird, und das die Eingangs-Winkelgetriebe der Schwenkgetriebe antreibt. Aus diesem Konzept resultiert hoher baulicher Aufwand.

Bei der aus EP 0 548 720 A bekannten Heuwerbungsmaschine ist ein einziges Eingangs-Winkelgetriebe mit einer nach beiden Seiten durchgehenden Getriebewelle vorgesehen, die nach außen durch aufgeschobene Getriebehohlwellen verlängert wird. Die jeweilige Getriebehohlwelle ist axial unverschieblich am Ende des Querträgers gelagert, an dem ein Kreiselträger um die Achse des Querträgers schwenkbar angebracht ist. Im Kreiselträger verläuft eine Antriebswelle, die über ein Kegelrad mit einem an der Getriebehohlwelle angeordneten Kegelrad gekoppelt ist. Der Kreiselausleger ist um die Achse des Querträgers schwenkbar, so dass auch das Kegelrad mit der Antriebswelle um die Getriebehohlwelle drehbar ist.

Bei einer aus FR 2 357 161 A bekannten Mähmaschine ist mit Mähbalkengetrieben ein Eingangsgetriebe starr verbunden, wobei die Getriebewelle des Eingangs-Winkelgetriebes die beiden anderen Getriebe durchsetzt. Diese beiden Getriebe sind auf dem Mähbalken nicht um die Getriebewelle drehbar.

Weiterer Stand der Technik ist enthalten in US 5 339 907 A, UR 4 860 526 A und EP 0 678 237 A.

Der Erfindung liegt die Aufgabe zugrunde, eine Antriebsvorrichtung, insbesondere für eine landwirtschaftliche Maschine mit mehr als einer Maschineneinheit, anzugeben, die baulich einfach ist.

Die gestellte Aufgabe wird mit den Merkmalen des Anspruchs 1 gelöst.

Das den Ausgangs-Winkelgetrieben gemeinsame, einzige Eingangs-Winkelgetriebe dient als Träger für alle Ausgangs-Winkelgetriebe, die von der gemeinsamen Getriebewelle angetrieben und auch auf dieser voneinander unabhängig drehbar sind. Dadurch werden ein Verteilergetriebe und zusätzliche Gelenkwellenstränge eingespart. Der notwendige Bauraum für die Antriebsvorrichtung ist gering. Jedes Ausgangs-Winkelgetriebe treibt ihre zugeordnete Maschineneinheit und kann dabei auf der Getriebewelle die durch die Schwenklage der zugeordneten Maschineneinheit diktierte Schwenklage einnehmen.

Um die Reaktionskräfte der Ausgangs-Winkelgetriebe günstig übertragen zu können, ist am Eingangs-Winkelgetriebe wenigstens ein Lagerträger für Drehlager der Getriebewelle angebracht. Dieser Lagerträger ist so ausgebildet, dass er den notwendigen Schwenkbereich des jeweiligen Ausgangs-Winkelgetriebes zulässt. Dabei ist es möglich, an sich gegenüberliegenden Seiten des Eingangs-Winkelgetriebes je einen Lagerträger anzuordnen, so dass das Eingangs-Winkelgetriebe zwischen den Ausgangs-Winkelgetrieben positioniert ist.

Zweckmäßig werden jedoch die Ausgangs-Winkelgetriebe an nur einer Seite des Eingangs-Winkelgetriebes im Lagerträger auf die Getriebewelle aufgefädelt untergebracht. Die U-Form des Lagerträgers gewährleistet die notwendige Formstabilität und die erforderliche Schwenkbarkeit jedes Ausgangs-Winkelgetriebes. Die Getriebewelle ist stabil abgestützt.

Von der seitlich der Ausgangswelle am Gehäuse des Ausgangs-Winkelgetriebes angeordneten Drehmomentstütze werden die Reaktionskräfte bzw. ―momente aus der Kraftübertragung aufgenommen. Ferner positioniert die Drehmomentstütze ihr Ausgangs-Winkelgetriebe in der jeweils durch die zugeordnete Maschineneinheit diktierten Schwenklage. Die bei benachbarten Ausgangs-Winkelgetrieben an beiden Seiten der durch die Gelenkwelle und die Ausgangswelle definierten Ebene angeordneten Widerlager sichern eine symmetrische Krafteinleitung in die Getriebewelle bzw. den Lagerträger und das Eingangs-Winkelgetriebe. Außerdem liegen hierbei günstige Hebelarme für die Drehmomentstützen vor.

Zweckmäßigerweise wird als Widerlager für die Drehmomentstütze ein Schwenkzapfen benutzt, der im Gehäuse festgelegt ist, beispielsweise dem Gehäusedeckel, der die Ausgangswelle drehlagert.

Eine L-förmige Drehmomentstütze ist vorteilhaft, weil sie günstige Hebelarme zur Kraftübertragung hat und den Bereich frei lässt, in welchem der von der Ausgangswelle abgehende Gelenkwellenstrang liegt.

Baulich einfach wird der Lagerträger aus parallelen Platten und wenigstens einem die Platten verbindenden Stützelement gebildet.

Zweckmäßigerweise ist das Stützelement ein Rundrohr- oder Profilrohrabschnitt, der bei geringem Gewicht ein hohes Widerstandsmoment erbringt.

Der Lagerträger sollte so gestaltet sein, dass er jedem Ausgangs-Winkelgetriebe einen Schwenkhub über mindestens 180° um die Getriebewelle ermöglicht. Gegebenenfalls ist sogar ein Schwenkhub bis zu 270° möglich.

Anhand der Zeichnung wird eine Ausführungsform des Erfindungsgegenstandes erläutert. Es zeigen:
- Fig. 1: eine Seitenansicht einer Antriebsvorrichtung in einer Stellung, in der die Eingangs- und Ausgangswellen in der Zeichnungsebene liegen,
- Fig. 2: einen Achsschnitt zu Fig. 1,
- Fig. 3: eine Perspektivansicht der Antriebsvorrichtung, in der zwei Ausgangs-Winkelgetriebe relativ zu einem Eingangs-Winkelgetriebe gegensinnig über jeweils ca. 90° aus der in Fig.1 gezeigten Lage verdreht sind, und
- Fig. 4: eine Perspektivansicht der Antriebsvorrichtung in der Stellung von Fig. 1.

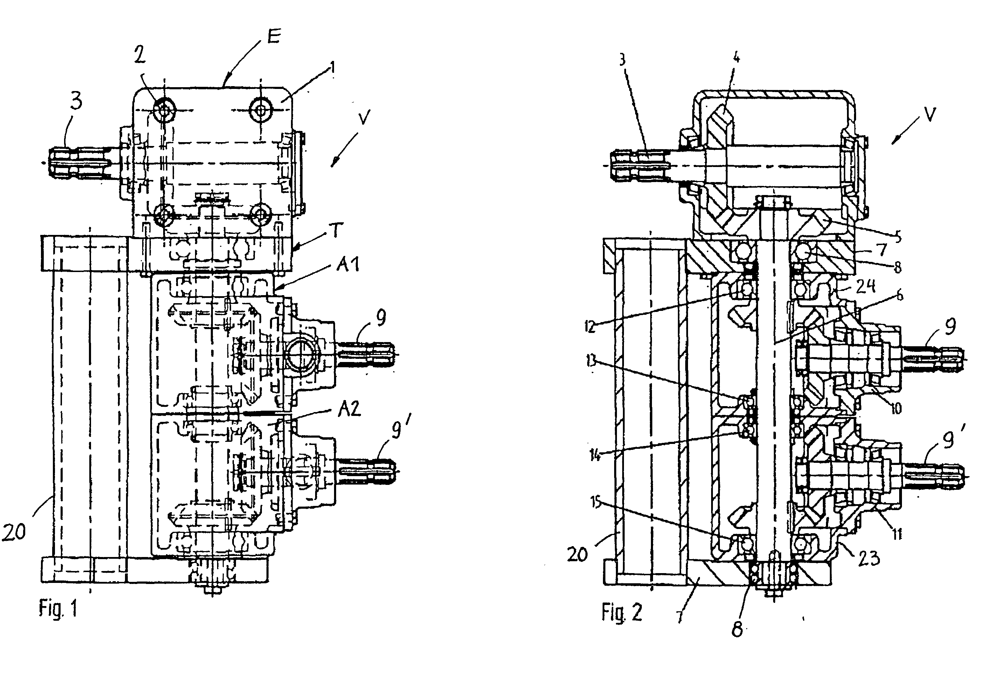

Eine in den Fig. 1 bis 4 gezeigte Antriebsvorrichtung V weist ein einziges Eingangs-Winkelgetriebe E und zwei relativ zum Eingangs-Winkelgetriebe E um eine gemeinsame Getriebewelle 6 verdrehbare Ausgangs-Winkelgetriebe A1, A2 auf. Es ist möglich, mit einem einzigen Eingangs-Winkelgetriebe E auch mehr als zwei Ausgangs-Winkelgetriebe A1 in analoger Anordnung zu kombinieren.

Die dargestellte Antriebsvorrichtung V ist dazu bestimmt, bei einer landwirtschaftlichen Maschine mit zwei antreibbaren Antriebseinheiten die Antriebsleistung von einer Zapfwelle eines nicht gezeigte Schleppers zu den beiden Maschineneinheiten zu übertragen, und zwar unabhängig von deren momentaner Schwenkstellung relativ zum Schlepper.

In den Fig. 1 bis 4 sind die beiden Ausgangs-Winkelgetriebe A1, A2 an einer Seite des Eingangs-Winkelgetriebes E angeordnet. Es wäre jedoch möglich, das Eingangs-Winkelgetriebe E zwischen den Ausgangs-Winkelgetrieben A1, A2 anzuordnen.

Das Eingangs-Winkelgetriebe E wird mit seinem Gehäuse 1 an Befestigungsstellen 2 beispielsweise mit einem Tragrahmen fest verbunden, der an der Dreipunkt-Hebevorrichtung des Schleppers in einer festen Drehposition relativ zum Schlepper angebracht wird, so dass sich die Schlepper-Zapfwelle an eine Eingangswelle 3 anschließen lässt. An dem Gehäuse 1 des Eingangs-Winkelgetriebes E ist ein in der gezeigten Ausführungsform U-förmiger Lagerträger T mit einer oberen Platte 7 befestigt, die einen U-Schenkel bildet. Der andere U-Schenkel wird ebenfalls von einer Platte 7 gebildet. Die Platten 7 sind durch eine Stützelement, beispielsweise einen Rundrohr- oder Profilrohrabschnitt 20, miteinander verbunden, der in Bohrungen der Platten 7 eingesteckt und dort verschweißt ist. Der Abschnitt 20 ist mit Querabstand und annähernd parallel zur Getriebewelle 6 angeordnet. In den Platten 7 sind Drehlager 8, z.B. Wälzlager, für die Getriebewelle 6 vorgesehen, die über Kegelräder 4, 5 von der Eingangswelle 3 her angetrieben wird. Die beiden Ausgangs-Winkelgetriebe A1, A2 besitzen eigenständige Getriebegehäuse 24, jeweils mit einem Gehäusedeckel 10, 11, in welchem eine Ausgangswelle 9, 9' drehgelagert ist, senkrecht zur Getriebewelle 6 steht und über ein Kegelradpaar angetrieben wird. Die Getriebegehäuse 23, 24 sind mittels Wälzlagem 12, 13, 14, 15 auf der Getriebewelle 6 um deren Achse drehbar oder schwenkbar gelagert. Der Schwenkbereich wird begrenzt durch den Abschnitt 20 und beträgt für jedes Ausgangs-Winkelgetriebe A1 bzw. A2 mindestens 180°.

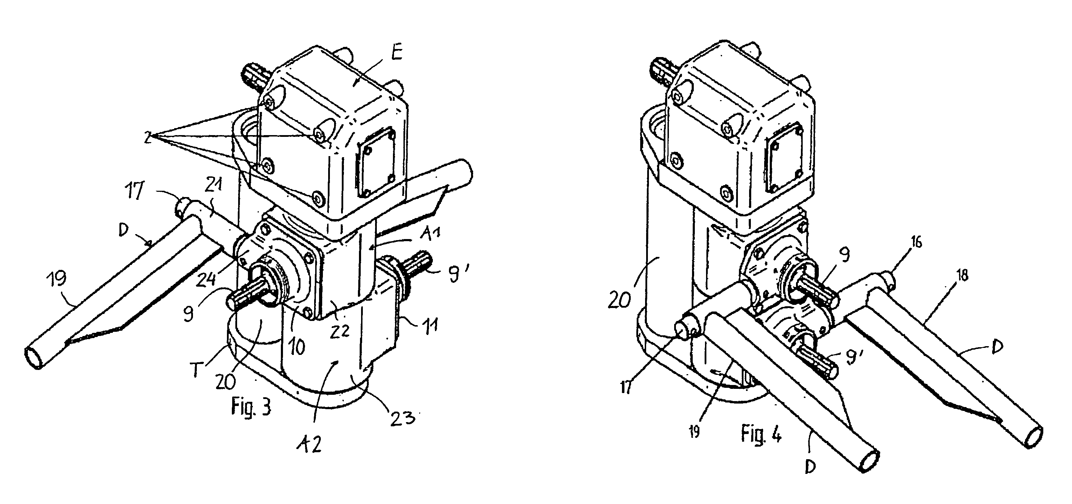

Gemäß Fig. 3 und 4 ist an jedem Ausgangs-Winkelgetriebe A1, A2 eine Drehmomentstütze D angebracht. In der gezeigten Ausführungsform ist im Gehäusedeckel 10, 11 eine Aufnahme 24 für ein Ende eines Widerlagers der Drehmomentstütze D vorgesehen, wobei das Widerlager zweckmäßigerweise durch einen Schwenkzapfen 17 gebildet wird, der frei auskragt und im Gehäusedeckel 10 bzw. 11 festgelegt ist. Der Schwenkzapfen 17 ist senkrecht zur Ausgangswelle 9 bzw. 9' und auch senkrecht zur Getriebewelle 6 angeordnet. Die Drehmomentstütze hat L-förmige Gestalt und besteht aus einem Rohrabschnitt 19 und einer Querhülse 21, die auf den Schwenkzapfen 17 aufgesteckt und gesichert ist. Die Querhülse 21 ist bezüglich der Achse des Rohrabschnitts 19 asymmetrisch, derart, dass der Rohrabschnitt 19 nahe dem frei auskragenden Ende des Schwenkzapfens 17 angeschlossen ist. Die Drehmomentstütze D ist um die Achse des Schwenkzapfens 17 auf- und abschwenkbar.

Gemäß Fig. 4 sind die Drehmomentstützen D beider Ausgangs-Winkelgetriebe beiderseits einer Ebene angeordnet, die durch die Ausgangswellen 9, 9' und die Getriebewelle 6 definiert ist, so dass sich symmetrische Kraftübertragungsverhältnisse ergeben.

In der Stellung von Fig. 3 sind die beiden Ausgangs-Winkelgetriebe A1, A2 aus der in Fig. 1 und 2 gezeigten Stellung gegensinnig über ca. jeweils 90° einer Seite um die Getriebewelle 6 verschwenkt. Dies kann einer Stellung entsprechen, in der die beiden anzutreibenden Maschineneinheiten in ihre ausladenden Arbeitsstellungen gebracht sind.

In der Stellung in Fig. 4, entsprechend der Stellung der Fig. 2 und 1, sind die Ausgangswellen 9, 9' in einer gemeinsamen Ebene angeordnet. Diese Stellung kann einer Stellung entsprechen, in der die beiden anzutreibenden Maschineneinheiten zueinander geschwenkt sind (Transportstellung).

## Patentansprüche

1. Antriebsvorrichtung (V) für eine landwirtschaftliche an einen Schlepper anschließbare Maschine, die mindestens zwei Maschineneinheiten mit antreibbaren Werkzeugen aufweist, wobei die Antriebsvorrichtung wenigstens ein Eingangs-Winkelgetriebe (E) und pro Maschineneinheit ein Ausgangs-Winkelgetriebe (A1, A2) aufweist, das relativ zum Eingangs-Winkelgetriebe (E) und dessen Getriebewelle verdrehbar ist, **dadurch gekennzeichnet, dass** den Ausgangs-Winkelgetrieben (A1, A2) gemeinsam ein einziges Eingangs-Winkelgetriebe (E) mit seiner Getriebewelle (6) als Träger der Getriebegehäuse (23, 24) der Ausgangs-Winkelgetriebe (A1, A2) zugeordnet ist, und dass die Getriebegehäuse (23, 24) der Ausgangs-Winkelgetriebe (A1, A2) voneinander unabhängig auf der Getriebewelle (6) drehbar sind.

2. Antriebsvorrichtung nach Anspruch 1, **dadurch gekennzeichnet, dass** am Eingangs-Winkelgetriebe (E) wenigstens ein im Schwenkbereich des jeweiligen Ausgangs-Winkelgetriebes (A1, A2) offen ausgebildeter Lagerträger (T) für Drehlager (8) der Getriebewelle (6) angebracht ist.

3. Antriebsvorrichtung nach Anspruch 2, **dadurch gekennzeichnet, dass** die Ausgangs-Winkelgetriebe (A1, A2) an einer Seite des Eingangs-Winkelgetriebes (E) nebeneinanderliegend auf die Getriebewelle (6) aufgefädelt sind, dass der Lagerträger (T) U-förmig ausgebildet ist, und dass die Ausgangs-Winkelgetriebe (A1, A2) zwischen den beiden Schenkeln des Lagerträgers (T) angeordnet sind.

4. Antriebsvorrichtung nach Anspruch 1, **dadurch gekennzeichnet, dass** jedes Ausgangs-Winkelgetriebe (A1, A2) ein eigenes Gehäuse (22, 23) aufweist, in dem eine zur Getriebewelle (6) senkrechte Ausgangswelle (9, 9') drehbar gelagert ist, dass an dem Gehäuse seitlich zur Ausgangswelle ein Widerlager (17, 24) einer mit der dem Ausgangs-Winkelgetriebe zugeordneten Maschineneinheit verbindbare Drehmomentstütze (D) angeordnet ist, und dass die Widerlager an den Gehäusen benachbarter Ausgangs-Winkelgetriebe an sich gegenüberliegenden Seiten einer durch die Achse der Getriebewelle (6) und die Achse der jeweiligen Ausgangswelle (9, 9') definierten Ebene angeordnet sind.

5. Antriebsvorrichtung nach Anspruch 4, **dadurch gekennzeichnet, dass** das Widerlager einen Schwenkzapfen (17) mit zur Ausgangswelle (9, 9') und zur Getriebewelle (6) zumindest in etwa senkrechten Zapfenachse aufweist, und dass der Schwenkzapfen frei auskragend in einem Gehäusedeckel (10, 11) festgelegt ist, in welchem die Ausgangswelle (9, 9') drehgelagert ist.

6. Antriebsvorrichtung nach Anspruch 4, **dadurch gekennzeichnet, dass** die Drehmomentstütze (D) L-förmig aus einem Rohrabschnitt (19) und einer endseitigen Querhülse gebildet und mit der Querhülse (21) schwenkbar derart auf dem Schwenkzapfen (17) gelagert ist, dass der den L-Hochschenkel bildende Rohrabschnitt (19) beim Auskragende des Schwenkzapfens (17) angeordnet ist.

7. Antriebsvorrichtung nach Anspruch 3, **dadurch gekennzeichnet, dass** der Lagerträger (T) aus zwei in etwa parallelen, die U-Schenkel definierenden Platten (7) und wenigstens einem die beiden Platten verbindenden, zumindest in etwa zur Achse der Getriebewelle (6) parallelen Stützelement besteht.

8. Antriebsvorrichtung nach Anspruch 7, **dadurch gekennzeichnet, dass** das Stützelement ein Rundrohr- oder Profilrohrabschnitt (20) ist, der mit seinen Enden in Bohrungen der Platten (7) eingreift und darin verschweißt ist.

9. Antriebsvorrichtung nach wenigstens einem der vorhergehenden Ansprüche, **dadurch gekennzeichnet, dass** jedes Ausgangs-Winkelgetriebe (A1, A2) relativ zum Eingangs-Winkelgetriebe (E) bis zum Anschlag am Stützelement des Lagerträgers (T) über mindestens 180° um die Getriebewelle (6) verdrehbar ist.

## Claims

1. Drive device (V) for an agricultural machine which can be connected to a tractor, which has at least two machine units with drivable tools, the drive device having at least one input angle transmission (E) and one output angle transmission (A1, A2) per machine unit which can be twisted in relation to the input angle transmission (E) and its gear shaft, **characterised in that** a single input angle transmission (E) with its gear shaft (6) is allocated to the output angle transmissions (A1, A2) jointly as support for the gearbox housing (23, 24) of the output angle transmission (A1, A2), and that the gearbox housing (23, 24) of the output angle transmission (A1, A2) can be turned independently of one another on the gear shaft (6).

2. Drive device according to Claim 1, **characterised in that** at least one open design bearing support (T) is fixed on the input angle transmission (E) in the swivel area of the relevant output angle transmission (A1, A2) for gear shaft (6) pivot bearings (8).

3. Drive device according to Claim 2, **characterised in that** the output angle transmissions (A1, A2) are threaded on one side of the input angle transmission (E) side by side on the gear shaft (6), that the bearing support (T) is U-shaped, and that the output angle transmissions (A1, A2) are placed between the two arms of the bearing support (T).

4. Drive device according to Claim 1, **characterised in that** each output angle transmission (A1, A2) has a separate housing (22, 23) in which an output shaft (9, 9') perpendicular to the gear shaft (6) is placed so that it can rotate, that an abutment (17, 24) of a torque bracket (D), which can be connected to the machine unit allocated to the output angle transmission, is placed on the housing laterally to the output shaft, and that the abutments are placed on the housings of adjacent output angle transmissions on the opposite sides of a plane defined by the axis of the gear shaft (6) and the axis of the relevant output shaft (9, 9').

5. Drive device according to Claim 4, **characterised in that** the abutment has at least one swivel pin (17) with the pin axis approximately perpendicular to the output shaft (9, 9') and to the gear shaft (6), and that the swivel pin is fixed freely projecting in a housing cap (10, 11) in which the output shaft (9, 9') is positioned to rotate.

6. Drive device according to Claim 4, **characterised in that** the torque bracket (D) is formed in an L shape from a pipe section (19) and an end side transverse socket and is placed with the transverse socket (21) so that it can be swivelled in such a way on the swivel pin (17) that the pipe section (19) forming the L high arm is arranged on projection of the swivel pin (17).

7. Drive device according to Claim 3, **characterised in that** the bearing support (T) consists of two approximately parallel plates (7) defining the U arm and at least one support element connecting the two plates, at least approximately parallel to the axis of the gear shaft (6).

8. Drive device according to Claim 7, **characterised in that** the support element is a round pipe or profile pipe section (20) which engages with its ends in bores of the plates (7) and is welded therein.

9. Drive device according to at least one of the preceding claims, **characterised in that** each output angle transmission (A1, A2) can be twisted in relation to the input angle transmission (E) until hitting the support element of the bearing support (T) over at least 180° around the gear shaft (6).

## Revendications

1. Dispositif d'entraînement (V) pour une machine agricole pouvant être raccordé à un tracteur, qui présente au moins deux unités de machines avec des outils pouvant être entraînés, le dispositif d'entraînement présentant au moins un engrenage angulaire d'entrée (E) et par unité de machine un engrenage angulaire de sortie (A1, A2), qui peut tourner par rapport à l'engrenage angulaire d'entrée (E) et à son arbre de transmission, **caractérisé en ce qu'**un unique engrenage angulaire d'entrée (E) avec son arbre de transmission (6) en tant que support du carter de transmission (23, 24) des engrenages angulaires de sortie (A1, A2) est attribué conjointement aux engrenages angulaires de sortie (A1, A2) et **en ce que** les carters de transmission (23, 24) des engrenages angulaires de sortie (A1, A2) peuvent tourner indépendamment les uns des autres sur l'arbre de transmission (6).

2. Dispositif d'entraînement selon la revendication 1, **caractérisé en ce qu'**au moins un support de palier (T) réalisé de façon ouverte dans la zone de pivotement de l'engrenage angulaire de sortie (A1, A2) respectif pour des coussinets de pivotement (8) de l'arbre de transmission (6) est placé sur l'engrenage angulaire d'entrée (E).

3. Dispositif d'entraînement selon la revendication 2, **caractérisé en ce que** les engrenages angulaires de sortie (A1, A2) sont enfilés sur un côté de l'engrenage angulaire d'entrée (E) les uns à côté des autres sur l'arbre de transmission (6), **en ce que** le support de palier (T) est conçu en forme de U et **en ce que** les engrenages angulaires de sortie (A1, A2) sont disposés entre les deux branches du support de palier (T).

4. Dispositif d'entraînement selon la revendication 1, **caractérisé en ce que** chaque engrenage angulaire de sortie (A1, A2) présente un carter (22, 23) propre, dans lequel un arbre de sortie (9, 9') perpendiculaire à l'arbre de transmission (6) est logé de façon pivotante, **en ce qu'**une butée (17, 24) d'un support de couple (D) pouvant être relié avec l'unité de machine attribuée à l'engrenage angulaire de sortie est disposée sur le carter sur le côté par rapport à l'arbre de sortie, et **en ce que** les butées sont disposées sur les carters d'engrenages angulaires de sortie voisins sur des côtés se faisant face d'un plan défini par l'axe de l'arbre de transmission 6 et l'axe de l'arbre de sortie (9, 9') respectif.

5. Dispositif d'entraînement selon la revendication 4, **caractérisé en ce que** la butée présente un pivot (17) avec l'axe de pivot au moins à peu près perpendiculaire par rapport à l'arbre de sortie (9, 9') et à l'arbre de transmission (6), et **en ce que** le pivot est fixé en saillie dans un couvercle de boîtier (10, 11), dans lequel l'arbre de sortie (9, 9') est logé de façon pivotante.

6. Dispositif d'entraînement selon la revendication 4, **caractérisé en ce que** le support de couple (D) est formé en forme de L à partir d'une partie tubulaire (19) et d'un manchon transversal côté extrémité et est logé avec le manchon transversal (21) de façon pivotante sur le pivot (17) de telle sorte que la partie tubulaire (19) formant la branche verticale en L est disposée près de l'extrémité en saillie du pivot (17).

7. Dispositif d'entraînement selon la revendication 3, **caractérisé en ce que** le support de palier (T) comprend deux plaques (7) à peu près parallèles et définissant les branches en U et au moins un élément de soutien reliant les deux plaques et parallèle au moins approximativement à l'axe de l'arbre de transmission (6).

8. Dispositif d'entraînement selon la revendication 7, **caractérisé en ce que** l'élément de soutien est une partie de tube rond ou une partie de tube profilé (20) qui s'engage avec ses extrémités dans des alésages des plaques (7) et soudée à l'intérieur.

9. Dispositif d'entraînement selon au moins l'une quelconque des revendications précédentes, **caractérisé en ce que** chaque engrenage angulaire de sortie (A1, A2) peut tourner d'au moins 180° autour de l'arbre de transmission (6) par rapport à l'engrenage angulaire d'entrée (E) jusqu'à la butée sur l'élément de soutien du support de palier (T).
